# EUROPEAN PATENT APPLICATION

(11) **EP 2 468 425 A1**
(43) Date of publication of application: **27.06.2012**
(21) Application number: 10196919.4
(22) Date of filing: 23.12.2010
(51) Int. Cl.: B06B 1/16, B01J 2/04, B01J 2/18, B06B 1/18

(54) **Pneumatic high-frequency turbine vibrator suitable for use in a prilling bucket**

(71) Applicant: Urea Casale SA, 6900 Lugano (CH)
(72) Inventor: Rizzi, Enrico, 22070 Casnate con Bernate (CO) (IT); Montini, Fabiano, 6807 Taverne (CH)
(74) Representative: Zardi, Marco

(57) **Abstract**

A pneumatic turbine vibrator (100) comprising: a sealed casing (120), a first unbalanced turbine (105) and a second unbalanced turbine (106), said first turbine and second turbine being contained in said casing (120), at least one compressed air feed powering said turbines, said turbines being arranged to produce counter-rotating forces (F1, F2) that add up in a given vibration direction (A) and are balanced in directions other than said vibration direction. A prilling bucket comprising said vibrator is also disclosed.

## Description

### Field of application

The present invention relates to a vibrator suitable for a prilling bucket. The invention relates also to a prilling bucket equipped with said vibrator.

### Prior Art

Prilling buckets are known in the art, see US 4 585 167, WO 2004/101131 and EP 2 008 709. Prilling bucket are used e.g. inside prilling towers to convert a given liquid product into solid prills. Prilling towers are found for example at the end stage of a urea plant.

A prilling bucket is basically a rotating, perforated container. For example, a known prilling bucket comprises a body connected to a rotating shaft, and having a perforated side wall. It is also known to vibrate the prilling bucket, normally according to the axis of rotation, in order to break the liquid jets exiting the perforated side wall and improve monodispersion, that is uniformity in size and shape, of the droplets.

Compressed air powered (pneumatic) vibrators are known to be suitable for use in prilling buckets, due to their ability to reach a high frequency, reliability, compactness, low cost and low weight. Said vibrators typically comprise a rigid housing that encloses a rotary unbalanced turbine wheel and are also named turbine vibrators. A turbine vibrator is disclosed in US 6 244 815.

In particular, the requirements of a vibrator for use with prilling buckets include: resistance to high temperatures, ability to deliver a significant force, such as 1000 - 2000 N, and ability to reach a high frequency at least of 5.000 cycles/min (about 83 Hz) or greater, preferably in a range of 10.000 - 50.000 cycles/min (166 to 833 Hz); compact size and low mass. Moreover, in a prilling bucket for urea, the vibrator is installed in a potentially aggressive environment. EP 2 070 589 discloses a prilling bucket making use of two counter-rotating pneumatic turbine vibrators. The turbine wheels of the two vibrators are mechanically connected to remain in-phase and are arranged to generate counter-rotating forces that are mutually balanced in all direction other than vertical, i.e. delivering a pure vertical force.

The advantages of the above solution include a less severe mechanical stress of the supports and bearings of the prilling bucket. The invention is aimed to further improve this embodiment.

### Summary of the invention

The applicant has developed a novel vibrator which is particularly adapted for use in a vibrating prilling bucket, more preferably in the field of urea prilling.

The vibrator is a high-frequency pneumatic turbine vibrator comprising: a casing, a first unbalanced turbine and a second unbalanced turbine, said first and second turbine being enclosed in said casing, at least one compressed air feed powering said turbines, said turbines being arranged to produce counter-rotating forces that add up in a vibration direction and are balanced in directions other than said vibration direction.

In a preferred embodiment, said first turbine and second turbine are engaged to maintain phased counter-rotation. More preferably, the first turbine and the second turbine have a gear crown, the gear crown of the first turbine is engaged with the gear crown of the second turbine, the transmission ratio being 1:1, so that the turbine maintain in-phase counter rotation.

The high frequency should be intended as being preferably 5.000 cycles/min or greater, and more preferably in a range of 5.000 - 50.000 cycles/min.

In a preferred embodiment of the invention, both the first turbine and the second turbine are directly powered by compressed air, i.e. are motive turbines. The casing may comprise at least one respective compressed air inlet for the first turbine and the second turbine.

A significant advantage of the invention is the elimination of a shaft, gear or other coupling means between two separate vibrators, since all the components are contained in a single and sealed casing. In particular, the coupling of two conventional turbine vibrators, in order to obtain a balanced operation, requires at least to provide an output shaft from each vibrator, and a related seal. Said seal operates on a rotating shaft and is a critical component. Wear of said seal may cause loss of lubricant, thus reducing the life of the vibrator. Moreover, a worn seal may cause loss of pressurized air and related loss of efficiency of the turbine. With this invention, a fully balanced vibrator can be furnished as a self-contained unit in a single and sealed container. The vibrator is lightweight, simple and reliable. Another advantage is that the vibrator can be easily replaced. The above advantages are of particular importance when the vibrator operates in a potentially aggressive environment, e.g. in a urea prilling bucket.

Hence, an aspect of the invention is a urea prilling bucket comprising a vibrator as described above. Normally the prilling bucket is installed on top of a vertical prilling tower, so that the axis of rotation and the axis of vibration are both vertical. The prilling bucket in operation rotates around an axis, and the direction of the vibration-driving force, namely the axis of vibration, is parallel to, or coincident with, the axis of rotation. The turbines of the vibrator deliver two rotating forces which are mutually balanced according to directions perpendicular to the axis of vibration, so that the resulting vibration-driving force transmitted to the bucket has a variable module but is constantly directed according to said axis of the bucket. The term "rotating force" is known to a skilled person and means a force which can be schematized with a vector rotating around a given fixed axis, as a function of time.

Further features and the advantages of the invention will become clearer from the following description of an indicative and non-limiting example of embodiments thereof, made with reference to the attached drawings.

### Brief description of the figures

Fig. 1 is a vibrator according to one embodiment of the invention.
Fig. 2 shows the vibrator of Fig. 1, where the cover has been removed to show the turbine wheels inside.
Fig. 3 illustrates the principle of operation of the synchronized unbalanced turbines of the vibrator of Fig. 1.
Fig. 4 is an exploded view of the vibrator of Fig. 1.
Fig. 5 is an exemplificative embodiment of a prilling bucket equipped with the vibrator of Fig. 1.

### Detailed description of a preferred embodiment of the invention

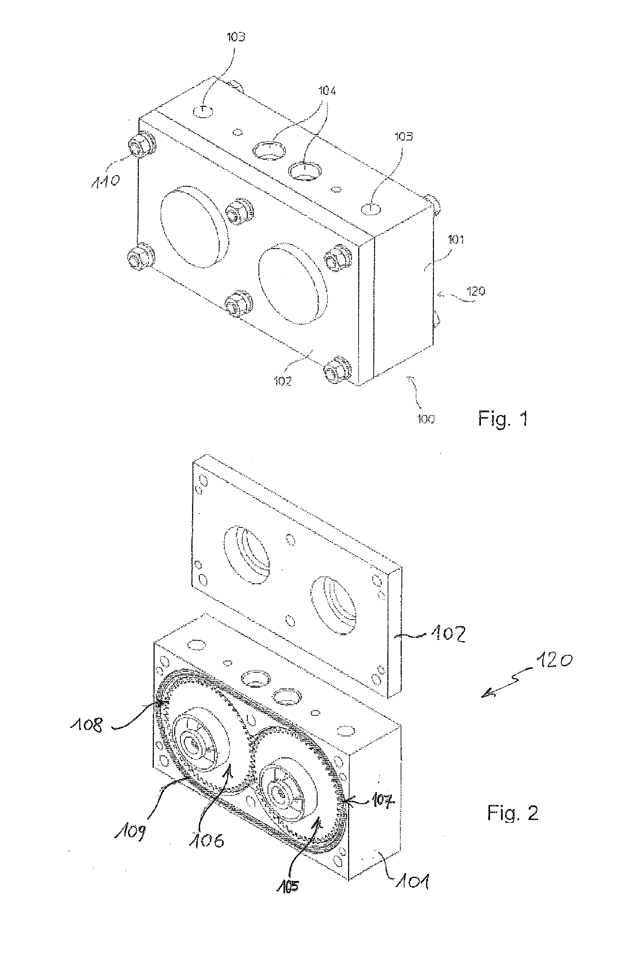

Fig. 1 discloses a self-contained pneumatic vibrator 100 according to a preferred embodiment of the invention, comprising a sealed casing 120 including a container 101 and cover 102.

The container 101 has openings 103, 104 for inlet and outlet of pressurized air and for powering two turbine wheels accommodated inside. As seen in Fig. 2, the vibrator 100 contains a first turbine wheel 105 and a second turbine wheel 106. The turbine wheels are received in a suitable seat of the main container 101. The cover 102 is fixed to the container 101 by means of screws 110, and a seal can be arranged in a seat 109 around the turbine wheels.

The turbine wheels 105, 106 are unbalanced, e.g. they carry an eccentric mass, according to per se known art of turbine vibrators. For example the turbine wheels can be made of plastics with a metal eccentric part. Details of the turbine wheels, such as materials, bearings, etc... are known in the art and need not be described.

The center of mass of each turbine is also eccentric with respect to the axis of rotation, as a consequence of said eccentric mass. As a result, each turbine wheel delivers a rotating force. The turbine wheels 105 and 106 are arranged to produce counter-rotating forces that add up in a given vibration direction and are balanced in directions other than said vibration direction. More in detail, the turbine wheels have the respective centers of mass in a mirrored position with respect to said direction.

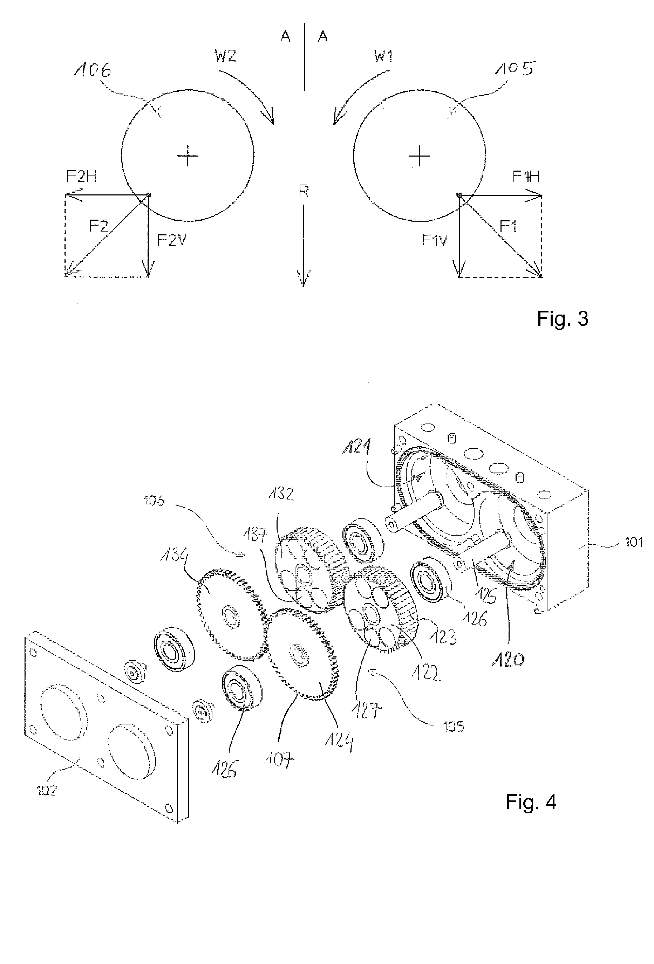

This principle is illustrated in Fig. 3. The first turbine wheel 105 rotates with speed W1 and the second turbine wheel 106 counter-rotates with speed W2, having the same value of speed W1 but opposite sense. Points G1 and G2 indicate the position of the centers of mass, due to the presence of an eccentric mass. The turbine wheels deliver forces F1 and F2 having a same module F, opposite horizontal components F1H, F2H and concurrent vertical components F1V, F2V.

Forces F1 and F2 are rotating forces, that is vectors of forces F1 and F2 rotates around the same axis of the turbine wheels with speed W1 and W2 respectively. The vectors of forces F1 and F2, in each instant of time, maintain opposite horizontal components and concurrent vertical components. Hence, in each instant of time horizontal forces F1H, F2H balance each other, while vertical components F1V, F2V are added. As a result, a vertical force R pulsating between +2F and -2F is produced. It can be appreciated that said force R has a constant direction, according to axis A shown in Fig. 3.

The turbine wheels 105, 106 are mechanically connected to keep phased rotation, i.e. to ensure that the above balance of horizontal components F1H, F2H is maintained. In a preferred embodiment, the phased rotation is given by a gear crown 107 of the first turbine wheel 105 engaging a gear crown 108 of the second turbine wheel 106. The geared turbine wheels ensure that the mirrored position of centers of mass G1, G2 with respect to vibration axis A is precisely maintained during operation.

The components of the vibrator, according to a preferred embodiment, are shown in Fig. 4. Each turbine wheel 105, 106 is received in a respective mounting seat 120, 121 of the container 101. The main components of the turbine 105 are indicated in Fig. 4. Said turbine wheel 105 comprises a rotor 122 with air-operated blades 123 for rotation. Said rotor 122 is coupled to a gear wheel 124 which carries the gear 107 engaging the gear of the other turbine. The assembly of rotor 122 and gear wheel 124 rotates around a support pin 125 and bearings 126. The rotor 122 has at least one hole 127 where an eccentric mass is fitted, to provide unbalanced rotation. The other turbine 106 is substantially identical, comprising a rotor 132 and a gear wheel 134. The distribution of the eccentric mass(es) is mirrored between the two turbines, e.g. the rotor 122 has one eccentric mass in hole 127 and the rotor 132 has one eccentric mass in hole 137, as shown.

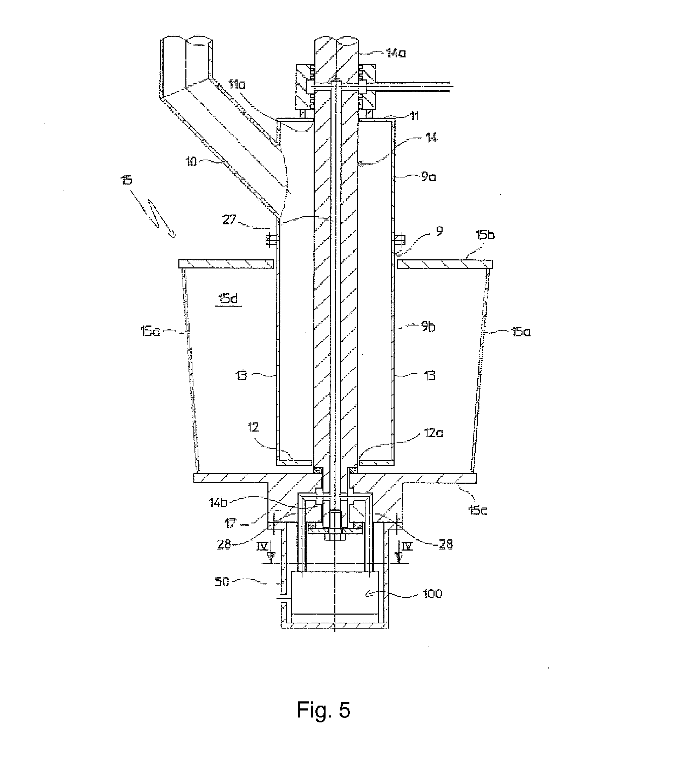

An embodiment of a prilling bucket comprising the inventive vibrator is now described. A bucket 15 (Fig. 5) has a frusto-conical body comprising top and bottom flanges 15b, 15c and a perforated side wall 15a. Said flanges and perforated wall define a chamber 15d adapted to contain a given amount of a fluid substance, e.g. urea.

The bucket 15 is connected to a motorized driving shaft 14 powered by a suitable motor (not shown).

The prilling bucket 15 has a duct 9 with a first portion 9a above plate 15b and extending outside the shell 2, connected to duct 10, and a second portion 9b extending inside the chamber 15d. Top and bottom of duct 9 are closed by respective plates 11, 12. The portion 9b of duct 9 is equipped with circumferential slits 13 suitable for delivering the fluid substance inside chamber 15d.

The motorized shaft 14 is coaxial to duct 9, passing through openings 11 a, 12a of plates 11 and 12 respectively, with possible interposition of gaskets (not represented). A reduced-diameter portion 14b of shaft 14 is connected to a base 17 of bottom flange 15c.

Connection between shaft 14 and bottom flange 15c is such that rotation of shaft 14 puts into rotation the flange 15c itself and hence wall 15a and top flange 15b. Preferably, the connection between shaft 14 and bottom flange 15c allows axial displacement between the shaft and the flange. This connection, being not part of the invention, is not described in further detail. A connection according to disclosure of WO 2004/101131, for example, can be used.

A carter 50 is fixed to said base 17 of bottom flange 15c, housing the vibrator 100. The vibrator 100 can be powered by a compressed air duct 27 coaxial to shaft 14. Air is fed to the air inlets of the vibrator 100 by further ducts 28 connected to the main air duct 27.

According to embodiments of the invention, the vibration-driving force can be transmitted to the whole body of the prilling bucket or to a part thereof, namely the perforated side wall only. To this purpose, the vibrator can be coupled to the perforated side wall of the bucket, and a flexible connection can be arranged between the side wall and other parts of the bucket, namely top and bottom flanges, said flexible connection acting as a mechanical filter for the vibration-driving force.

## Claims

1. A high-frequency pneumatic turbine vibrator (100) comprising: a sealed casing (120), a first unbalanced turbine (105) and a second unbalanced turbine (106), said first turbine and second turbine being contained in said casing (120), at least one compressed air feed powering said turbines, said turbines being arranged to produce counter-rotating forces (F1, F2) that add up in a given vibration direction (A) and are balanced in directions other than said vibration direction.

2. A vibrator according to claim 1, said first turbine and second turbine being identical and engaged each other to maintain phased counter-rotation.

3. A vibrator according to claim 2, the first turbine having a first gear crown (107) and the second turbine having a second gear crown (108), the gear crown of the first turbine being engaged with the gear crown of the second turbine, and the transmission ratio being 1:1.

4. A vibrator according to any of the preceding claims, both the first turbine and the second turbine being motive turbines directly powered by compressed air.

5. A vibrator according to claim 4, the casing (120) comprising at least one compressed air inlet for powering the first turbine and at least another compressed air inlet for powering the second turbine.

6. A vibrator according to any of claims 1 to 5, said high frequency being 5.000 cycles/min or greater and preferably in a range of 5.000 - 50.000 cycles/min.

7. A vibrating prilling bucket (15) for prilling a fluid substance, especially urea, said bucket comprising a vibrator (100) according to any of claims 1 to 6.

8. The use of a vibrator according to any of claims 1 to 6 in a vibrating prilling bucket for the prilling of a fluid substance, especially for the prilling of urea.
